# EUROPÄISCHE PATENTSCHRIFT

(11) **EP 2 193 870 B1**
(45) Veröffentlichungstag und Bekanntmachung des Hinweises auf die Patenterteilung: **10.02.2016**
(21) Anmeldenummer: 09014720.8
(22) Anmeldetag: 26.11.2009
(51) Int. Cl.: B23K 9/10, B23K 37/02, B23K 9/32

(54) **Tragbares elektrisches Schweiß- und/oder Schneidegerät**
Portable electric welding and/or cutting device
Appareil de soudure et/ou de découpe électrique portable

(30) Priorität: 08.12.2008 DE 202008016149 U
(43) Veröffentlichungstag der Anmeldung: 09.06.2010
(73) Patentinhaber: Merkle Schweissanlagen-Technik GmbH, 89359 Koetz (DE)
(72) Erfinder: Merkle, Wilhelm, 89359 Kötz (DE)
(74) Vertreter: Munk, Ludwig

(56) Entgegenhaltungen:
- EP-A1- 1 884 307
- EP-A2- 1 247 609
- WO-A1-99/44781
- DE-U- 1 978 292
- US-A- 2 253 403
- US-A1- 2004 182 845
- US-A1- 2006 081 577
- US-B1- 7 241 973

## Beschreibung

Die Erfindung betrifft ein tragbares Schweiß- und/oder Schneidgerät mit einem elektrischen Leistungsteil, das in einem Gehäuse montiert ist, an dem dem Leistungsteil zugeordnete Bedienungsarmaturen angebracht sind und das mit Ein- und Ausgängen für dem Leistungsteil zugeordnete Kabel und/oder Leitungen versehen ist

Tragbare Geräte kommen insbesondere bei vor Ort auf Baustellen etc. auszuführenden Schweiß- und/oder Schneidarbeiten zum Einsatz. Dabei muss nicht nur das Schweiß- und/oder Schneidgerät allein an den Einsatzort gebracht werden, sondern die gesamte zugehörige Schweißausrüstung.

Aus der WO 99/44781 ist ein tragbares Schweiß- und/oder Schneidgerät eingangs erwähnter Art bekannt. Bei dieser bekannten Anordnung ist jedoch innerhalb des Gehäuses kein zusätzlicher Stauraum für Zubehör- und/oder Hilfsmittel vorgesehen.

In der DE 20 2007 018 372 U1 wird ein Koffer vorgeschlagen, in welchem eine gesamte Schweißeinrichtung einschließlich Schweißgerät verstaut werden kann. Der Koffer ist hierzu mit geeigneten Fächern zur Aufnahme der einzelnen Teile der Schweißeinrichtung einschließlich Schweißgerät versehen. Vor Ort muss der genannte Koffer ausgepackt werden, wobei das Schweißgerät und die weiteren Teile der Schweißeinrichtung aus dem Koffer entnommen werden müssen. Nachteilig dabei ist, dass hierbei nicht nur Platz für den geöffneten Koffer vorhanden sein muss, sondern auch für das aus dem Koffer zu entnehmende Schweißgerät etc.. Dies kann auf Baustellen etc. zu Problemen führen. Der bekannte Vorschlag erweist sich daher als nicht arbeits- und bedienungsfreundlich genug.

Die EP 1 247 609 A2 zeigt ein tragbares Schweißgerät, bei dem dem Gehäuse ein abnehmbarer Deckel zugeordnet ist, der einen zusätzlichen Stauraum abdeckt. Der Deckel ist jedoch als Schweißmaske ausgebildet, so dass kein Traggriff zum Tragen des Schweißgeräts vorgesehen sein kann, was den Transport erschwert.

Hiervon ausgehend ist es daher die Aufgabe der vorliegenden Erfindung, eine Anordnung eingangs erwähnter Art mit einfachen und kostengünstigen Mitteln so zu verbessern, dass eine hohe Arbeits- und Bedienungsfreundlichkeit erreichbar ist.

Diese Aufgabe wird erfindungsgemäß durch ein tragbares elektrisches Schweiss- und oder Schneidgerät gemäß Anspruch 1 gelöst.

Diese Maßnahmen ergeben in vorteilhafter Weise ein tragbares Schweiß- und/oder Schneidgerät mit Traggriff und zusätzlichem Stauraum. Da dieser Stauraum in das Gerätegehäuse integriert ist, ist ein separater Koffer etc. entbehrlich. Es ist in vorteilhafter Weise auch nicht erforderlich, zum Durchführen von Schweiß- und/oder Schneidarbeiten das Schweiß- und/oder Schneidgerät aus dem Behälter zu entnehmen und neben diesem zu platzieren. Der Behälter bildet vielmehr bereits das Gehäuse des Geräts. Dadurch dass das dem Leistungsteil zugeordnete Abteil im unteren, bodenseitigen Bereich des durch das Gehäuse gebildeten Behälters angeordnet ist, ist sichergestellt, dass die weiteren, der im so geschaffenen Stauraum untergebrachten Teile einfach nach oben entnommen werden können, was eine sinnfällige Arbeitsweise ergibt. Da der obere Bereich des Innenraums des durch das Gehäuse gebildeten Behälters durch einen Zwischenboden vom unteren, dem Leistungsteil zugeordneten Abteil abgetrennt ist, wird eine stabile und robuste Anordnung mit sicherer Unterbringung des Leistungsteils erreicht. Die im unteren Abteil neben dem Leistungsteil vorgesehene Kabeltrommel erleichtert in vorteilhafter Weise eine ordentliche Kabelhandhabung, was die Sicherheit erhöht. Mit den erfindungsgemäßen Maßnahmen werden daher die eingangs erwähnten Nachteile der bekannten Anordnungen vollständig vermieden und die oben genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben.

Vorteilhaft kann das untere, dem Leistungsteil zugeordnete Abteil eine Frontplatte mit Bedienungs- und Anschlussarmaturen aufweisen. Dies gewährleistet trotz der Integration des Leistungsteils in einen Behälter eine hohe Bedienungsfreundlichkeit.

In weiterer Fortbildung der übergeordneten Maßnahmen kann der durch das Gehäuse gebildete Behälter als Trolley ausgebildet sein. Dies gewährleistet einen besonders hohen Bedienungskomfort bei der Fortbewegung.

Eine weitere vorteilhafte Maßnahme kann darin bestehen, dass an einer Seite des durch das Gehäuse gebildeten Behälters eine Anbaueinrichtung zur lösbaren Anbringung eines Anbauträgers für ein Zusatzgerät vorgesehen sein. Dies ermöglicht eine vielfach erwünschte Erweiterung der Schweißeinrichtung um nicht im Behälter verstaubare Elemente wie eine Gasflasche, einen Werktisch etc..

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen schematischen Längsschnitt durch ein tragbares, elektrisches Schweiß- und/oder Schneidgerät,
- Figur 2: eine Fortbildung der Anordnung gemäß Figur 1 in Form eines Trolleys,
- Figur 3: die Anordnung gemäß Figur 1 mit zugeordnetem Anbauträger in explosionsartiger Darstellung und
- Figur 4: eine perspektivische Ansicht des als Gehäuse ausgebildeten Behälters mit geöffnetem Deckel und angebrachtem Anbauträger.

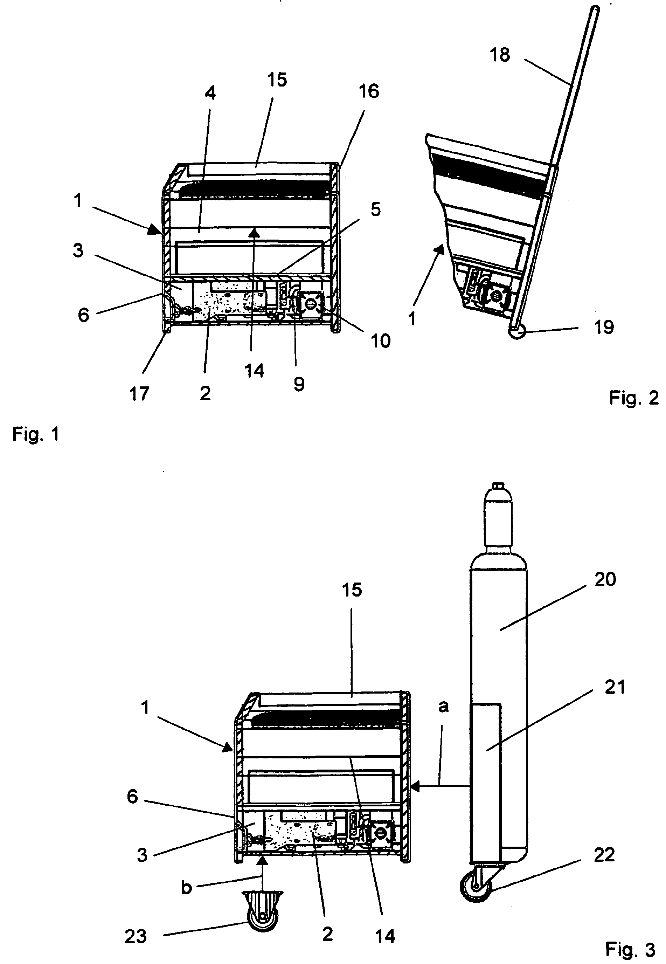

Der Figur 1 liegt die Grundausführung des erfindungsgemäßen Schweiß- und/oder Schneidgeräts mit Stauraum zugrunde. Die weiteren Figuren zeigen diese Grundausführung in Verbindung mit weiteren Maßnahmen. Der Beschreibung der Figur 1 gilt daher auch für die weiteren Figuren.

Das den Figuren 1 bis 4 zugrundeliegende, tragbare elektrische Schweiß- und/oder Schneidgerät besitzt ein Gerätegehäuse 1 und ein hierin samt zugeordneten Bedienungs- und Anschlussarmaturen montiertes Leistungsteil 2. Das Gehäuse 1 ist als über den Platzbedarf des Leistungsteils 2 hinaus vergrößerter, tragbarer Behälter ausgebildet, der ein dem fest hierin installierten Leistungsteil 2 zugeordnetes Abteil 3 und einen diesem benachbarten als Stauraum für zur Bildung einer kompletten Schweißeinrichtung benötigten Zubehörteilen und Hilfsmitteln dienenden Bereich 4 aufweist.

Sofern ein Schweißgerät zugrundeliegt, das mit einem von einer Trommel abwickelbaren, abschmelzenden Schweißdraht arbeitet, können im Abteil 3 auch die einen ausreichenden Vorrat an Schweißdraht enthaltende Schweißdrahttrommel und ein Schweißdrahtvorschub angeordnet sein. In jedem Fall ist es somit möglich, eine komplette, zur Durchführung von Schweiß- und/oder Schneidarbeiten benötigte Einrichtung und Ausrüstung im ohnehin benötigten Gerätegehäuse unterzubringen.

Das dem Leistungsteil 2 zugeordnete Abteil 3 ist im unteren, bodenseitigen Bereich des durch das Gehäuse 1 gebildeten Behälters angeordnet Zweckmäßig ist das Abteil 3 durch einen Zwischenboden 5 vom oberen Bereich des Innenraums des Gehäuses 1 abgetrennt Sofern eine Schweißdrahttrommel und ein Drahtvorschub vorgesehen sind, kann das untere Abteil 3 durch eine Trennwand in zwei Kammern unterteilt sein.

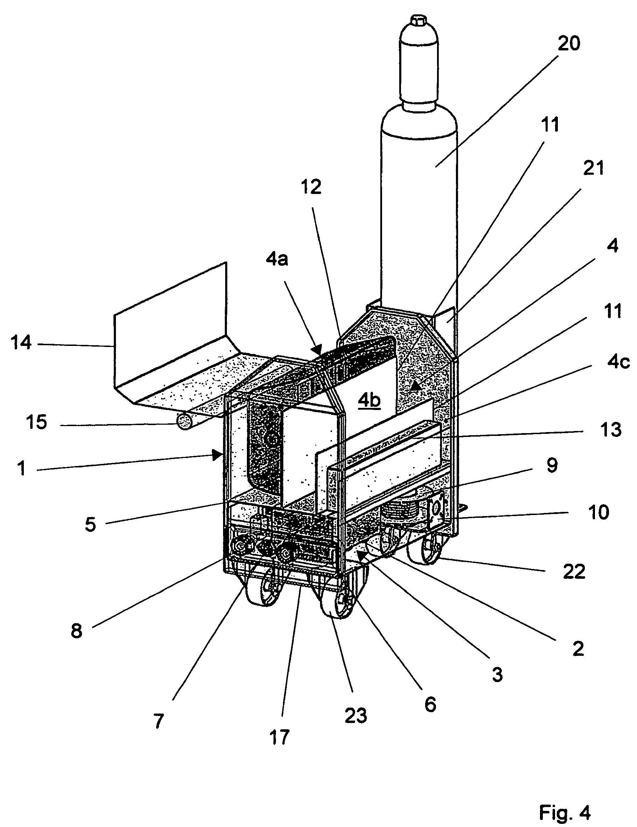

Das dem Leistungsteil 2 zugeordnete Abteil 3 ist im Bereich einer Seite, vorzugsweise im Bereich einer Schmalseite des Gehäuses 1 mit einer die Bedienungsseite bildenden Frontplatte 6 versehen, die mit Bedienungs- und/oder Anschlussarmaturen bestückt ist. Dabei kann es sich, wie am besten aus Figur 4 erkennbar ist, in an sich bekannter Weise um Schaltelemente 7, Anzeigedisplays, Steckbuchsen 8 zum Anstecken eines Brennerschlauchs bzw. eines Werkstückkabels etc. handeln.

Das Abteil 3 enthält im dargestellten Beispiel zusätzlich zum Leistungsteil 2 eine hinter dieser angeordnete Kabeltrommel 9 für ein dem Leistungsteil 2 zugeordnetes elektrisches Anschlusskabel. Die Kabeltrommel 9 ist zweckmäßig mit einem Einzugsmechanismus versehen, der einen automatischen Einzug des elektrischen Kabels bewerkstelligt. Der Kabeltrommel 9 ist daher ein im Bereich einer Seitenwand des unteren Abteils 3 vorgesehener Fangtrichter 10 zugeordnet, in dem ein am Ende eines durch ihn durchgeführten Kabels angeordneter Stecker zur Beendigung der Einzugsbewegung aufgenommen wird.

Der obere als Stauraum fungierende Bereich 4 des durch das Gehäuse 1 gebildeten Behälters ist, wie Figur 4 weiter anschaulich zeigt, durch auf den Zwischenboden 5 aufgesetzte Trennwände 11 in mehrere, von oben zugängliche Fächer 4a, 4b, 4c unterteilt, in denen die zur Durchführung von Schweiß- und/oder Schneidarbeiten benötigten Zubehörteile und Hilfsmittel untergebracht werden können. In dem Gehäuse 1 befindet sich dementsprechend eine komplette, zur Durchführung von Schweiß- oder Schneidarbeiten benötigte Einrichtung.

Bei den genannten Zubehörteilen und Hilfsmitteln kann es sich um ein in Figur 4 angedeutetes Schutzschild 12 sowie um den an die zugeordnete Anschlussbuchse 8 ansteckbaren, mit einem Brenner versehenen Brennerschlauch (nicht dargestellt), das an der zugeordneten Anschlussbuchse 8 ansteckbare, mit einer Werkstückklemme versehene Werkstückkabel (ebenfalls nicht dargestellt), einen Schlackenhammer (ebenfalls nicht dargestellt), eine Stahlbürste (ebenfalls nicht dargestellt), Arbeitshandschuhe (ebenfalls nicht dargestellt), die Bedienungsanleitung (ebenfalls nicht dargestellt) und dergleichen handeln. Bei Schweißgeräten mit abbrennender Elektrode gehört auch ein Elektrodenvorrat zu den Zubehörteilen und Hilfsmitteln. Dieser kann in einem der Fächer des oberen Bereichs 4 des Gehäuseinnenraums angeordneten Kasten 13 untergebracht sein. Bei Schweißgeräten mit nicht abbrennender Elektrode ist zweckmäßig eine Ersatzelektrode vorhanden. Diese kann ebenfalls in einem zugeordneten Kasten untergebracht sein. Auch sonstige Werkzeuge wie Zangen, Schlüssel und dergleichen können im Stauraumbereich des Gehäuses 1 untergebracht sein. Die Konfiguration und Größe der Fächer 4a, b, c ist zweckmäßig der Konfiguration und Größe der hierin unterzubringenden Gegenstände angepasst, wie anhand des Schutzschilds 12 und dem diesem zugeordneten Fach 4a erkennbar ist. Zweckmäßig können in den Fächern 4a, b, c geeignete Halter zur Sicherung der zugeordneten Gegenstände vorgesehen sein. Dabei kann es sich um Spanngurte, Klemmfedern und dergleichen (nicht dargestellt) handeln.

Die Oberseite des Stauraumbereichs des Gehäuses 1 ist durch einen schwenkbaren Deckel 14 verschließbar. Dieser besitzt zweckmäßig eine wannen- bzw. rinnenförmige Querschnittskonfiguration, so dass sich bei geschlossenem Deckel 14 eine zusätzliche Erhöhung des als Stauraum fungierenden Innenraums des Gehäuses 1 ergibt. Zweckmäßig ist dem Deckel 14 ein Schloss (nicht dargestellt) zugeordnet, durch welches der Deckel 14 im geschlossenen Zustand gehalten und zur Vermeidung eines unerwünschten Zugriffs abgesperrt werden kann. Zum Tragen des Gehäuses 1 ist diesem wenigstens ein Traggriff 15 zugeordnet. Dieser kann zweckmäßig auf der Außenseite des durch ein Schloss in der geschlossenen Position blockierbaren Deckels 14 angeordnet sein, so dass eine gute Zugänglichkeit von oben gewährleistet ist. Im dargestellten Beispiel ist der Traggriff 15 einfach als das Gehäuse 1 mittig übergreifender Stab ausgebildet sein, dessen Enden an auf den Deckel 14 aufgesetzten Laschen 16 befestigt sind.

Das Gehäuse 1 ist zweckmäßig mit unteren Standfüßen 17 versehen. Im dargestellten Beispiel sind hierzu, wie am besten aus Figur 4 ersichtlich ist, einfach die stirnseitigen Gehäusewände über den Boden des unteren Abteils 3 hinaus nach unten verlängert. Zur Bewerkstelligung einer einfachen Fortbewegung des Gehäuses über längere Strecken hinweg kann das Gehäuse 1 zweckmäßig nach Art eines sog. Trolleys ausgebildet sein, wie in Figur 2 angedeutet ist Dabei ist im Bereich einer Seite des Gehäuses 1 ein vorzugsweise ausziehbarer Schub- und Zugbügel 18 vorgesehen. Am unteren Ende der dem Bügel 18 zugeordneten Gehäuseseite sind Laufrollen 19 vorgesehen, welche über die Standfüße 17 leicht vorstehen, so dass das Gehäuse 1 im gekippten Zustand fahrbar ist.

In manchen Fällen sind weitere, nicht in dem durch das Gehäuse 1 gebildeten Behälter verstaubare Zubehörteile erwünscht oder notwendig. Dabei kann es sich z.B. um eine kleine Werkbank oder um eine Schutzgas enthaltende, in den Figuren 3 und 4 sichtbare Gasflasche 20 oder dergleichen handeln. Derartige Zusatzeinrichtungen sind zweckmäßig auf einem zugeordneten Anbauträger 21 aufgenommen, der bei Bedarf an das Gehäuse 1 angebaut werden kann, wie in der der Figur 3 zugrundeliegenden Explosionsdarstellung durch einen Pfeil a angedeutet ist. Die Figur 4 zeigt den angebauten Zustand. Das Gehäuse 1 besitzt im Bereich einer Außenseite, zweckmäßig im Bereich der der mit Schalt- und Anschlussarmaturen versehenen Frontplatte 6 gegenüberliegenden Seite eine dem Anbauträger 21 zugeordnete Anbaueinrichtung. Dabei kann es sich beispielsweise um ein Lochbild zur Aufnahme von Halteschrauben handeln.

Der der Gasflasche 20 zugeordnete Anbauträger 21 ist zur Aufnahme des Gewichts der Gasflasche 20 mit unteren Laufrollen 22 versehen. Zweckmäßig sind dabei im Bereich der gegenüberliegenden Gehäuseseite entsprechende Rollen 23 am Gehäuse 1 anbringbar, wie in Fig. 4 durch den Pfeil 6 angedeutet ist. Das Gehäuse 1 besitzt daher auch ein als entsprechende Anbaueinrichtung fungierendes bodenseitiges Lochbild zum Anbau der Rollen 23. Von der Gasflasche 20 führt bei Schutzgasschweiß- und Schneidgeräten ein nicht dargestellter Gasschlauch zum dem Leistungsteil 2 zugeordneten Abteil 3 und in diesem zu der entsprechenden Anschlussbuchse 8 für den mit dem Brenner verbundenen Brennerschlauch.

Das Gehäuse 1 kann aus unterschiedlichen Materialien wie Blech und/oder Kunststoff hergestellt werden. Dabei ist eine Herstellung aus mehreren, zusammengesetzten Teilen oder eine einteilige Herstellung möglich. Der Deckel 14 wird zweckmäßig separat hergestellt und durch eine Schamieranordnung mit dem Gehäuse 1 verbunden. Es wäre aber auch eine einteilige Ausführung mit Filmscharnier denkbar.

Die Erfindung ist nicht auf die in den Zeichnungen gezeigten bzw. oben erwähnten Ausführungen beschränkt. Vielmehr stehen dem Fachmann eine Reihe von Möglichkeiten zur Verfügung, um den allgemeinen Gedanken der erfindungsgemäßen Anordnung an die Verhältnisse des Einzelfalls anzupassen.

## Patentansprüche

1. Tragbares, elektrisches Schweiss- und/oder Schneidgerät mit einem elektrischen Leistungsteil (2), das in einem als tragbarer Behälter ausgebildeten Gehäuse (1) montiert ist, an dem dem Leistungsteil (2) zugeordnete Bedienungsarmaturen (7) angebracht sind und das mit Ein- und/oder Ausgängen für dem Leistungsteil (2) zugeordnete Kabel und/oder Leitungen versehen ist, wobei der das Gehäuse (1) bildende tragbare Behälter über das Leistungsteil (2) hinaus vergrößert ist und ein dem Leistungsteil (2) zugeordnetes Abteil (3), in welchem das Leistungsteil (2) fest installiert ist, und einen als Stauraum für Zubehör- oder Hilfsmittel ausgebildeten Bereich (4) aufweist, wobei das dem Leistungsteil (2) zugeordnete Abteil (3) im unteren, bodenseitigen Bereich des das Gehäuse (1) bildenden Behälters angeordnet und durch einen Zwischenboden (5) vom darüber vorgesehenen, den Stauraum für Zubehör und/oder Hilfsmittel bildenden Bereich (4) des Innenraums des das Gehäuse (1) bildenden Behälters abgetrennt ist und **dadurch gekennzeichnet, dass** in dem dem Leistungsteil (2) zugeordneten Abteil (3) neben dem Leistungsteil (2) eine mit einem Einzugsmechanismus versehene Kabeltrommel (9) für ein elektrisches Anschlusskabel vorgesehen ist, der ein an einer Seitenwand des Gehäuses (1) vorgesehener Kabelausgang zugeordnet ist, der einen Trichter (11) zum Fangen eines am Ende des Anschlusskabels vorgesehenen Steckers aufweist und wobei der obere, einen Stauraum für Zubehör oder Hilfsmittel bildende Bereich (4) des das Gehäuse (1) bildenden Behälters durch Zwischenwände (11) in mehrere, von oben zugängliche Fächer (4a, b, c) unterteilt ist und wobei die Oberseite des das Gehäuse (1) bildenden Behälters durch einen schwenkbaren Deckel (14) verschließbar ist, der eine wannen- oder rinnenförmige Querschnittskonfiguration aufweist und im Bereich seiner Außenseite mit einem Traggriff (15) versehen ist.

2. Tragbares elektrisches Schweiss- und/oder Schneidgerät nach Anspruch 1, **dadurch gekennzeichnet, dass** das dem Leistungsteil (2) zugeordnete Abteil (3) eine Frontplatte (6) mit Bedienungs- und/oder Anschlussarmaturen (7,8) aufweist.

3. Tragbares elektrisches Schweiss- und/oder Schneidgerät nach Anspruch 2, **dadurch gekennzeichnet, dass** die Anschlussarmaturen (8) als Steckbuchsen zumindest zum Anstecken eines Brennerschlauchs und/oder Werkstückkabels ausgebildet sind.

4. Tragbares elektrisches Schweiss- und/oder Schneidgerät nach einem der vorhergehenden Ansprüche, **dadurch gekennzeichnet, dass** die Größe und/oder Konfiguration der im oberen Bereich (4) des das Gehäuse (1) bildenden Behälters vorgesehene Fächer (4a, b, c) der Größe und/oder Konfiguration der darin aufzunehmenden Gegenstände angepasst ist und in den Fächern (4a, b, c) Halter für die darin aufzunehmenden Gegenstände vorgesehen sind.

5. Tragbares elektrisches Schweiss- und/oder Schneidgerät nach einem der vorhergehenden Ansprüche, **dadurch gekennzeichnet, dass** der Deckel (14) absperrbar ist.

6. Tragbares elektrisches Schweiss- und/oder Schneidgerät nach einem der vorhergehenden Ansprüche, **dadurch gekennzeichnet, dass** der Traggriff (15) als über die Länge des Deckels (14) durchgehender, mittig angeordneter Stab ausgebildet ist.

7. Tragbares elektrisches Schweiss- und/oder Schneidgerät nach einem der vorhergehenden Ansprüche, **dadurch gekennzeichnet, dass** der durch das Gehäuse (1) gebildete Behälter mit unteren Standfüßen (17) versehen ist.

8. Tragbares elektrisches Schweiss- und/oder Schneidgerät nach einem der vorhergehenden Ansprüche, **dadurch gekennzeichnet, dass** der durch das Gehäuse (1) gebildete Behälter als Trolley ausgebildet ist, der mit einem vorzugsweise ausziehbaren Zug- und/oder Schubbügel (18) und diesem zugeordneten Rollen (19) versehen ist.

9. Tragbares elektrisches Schweiss- und/oder Schneidgerät nach einem der vorhergehenden Ansprüche, **dadurch gekennzeichnet, dass** an einer Seite, vorzugsweise an der der mit Anschluss- und Bedienungsarmaturen (7,8) versehenen Frontplatte (6) gegenüberliegenden Seite des durch das Gehäuse (1) gebildeten Behälters eine Anbaueinrichtung zur lösbaren Anbringung eines einem nicht im durch das Gehäuse (1) gebildeten Behälter verstaubaren Gegenstand zugeordneten Anbauträgers (21) vorgesehen ist.

10. Tragbares elektrisches Schweiss- und/oder Schneidgerät nach Anspruch 9, **dadurch gekennzeichnet, dass** die Anbaueinrichtung als im Bereich einer Seite des Gehäuses (1) vorgesehenes Lochbild ausgebildet ist.

11. Tragbares elektrisches Schweiss- und/oder Schneidgerät nach Anspruch 9 oder 10, **dadurch gekennzeichnet, dass** der Anbauträger (21) mit Rollen (22) versehen ist und dass das Gehäuse (1) bodenseitig mit Anschlussmitteln für weitere Rollen (23) versehen ist.

12. Tragbares elektrisches Schweiss- und/oder Schneidgerät nach einem der Ansprüche 9 bis 11, **dadurch gekennzeichnet, dass** der Anbauträger (21) zur Aufnahme einer Gasflasche (20) eingerichtet ist und dass ein hiervon abgehender Gasschlauch in das dem Leistungsteil (2) zugeordnete Abteil (3) einführbar ist.

## Claims

1. A portable electric welding and/or cutting device, comprising an electric power section (2) that is mounted in a housing (1) which is formed as a portable container and on which operating instruments (7) assigned to the power section (2) are attached, and which is provided with inputs and/or outputs for cables and/or lines assigned to the power section (2), wherein the portable container forming the housing (1) is enlarged beyond the power section (2) and comprises a compartment (3) which is assigned to the power section (2) and in which the power section (2) is fixedly installed, and comprises a region (4) formed as a storage space for accessories or auxiliary means, wherein the compartment (3) which is assigned to the power section (2) is arranged in the lower region close to the bottom of the container forming the housing (1) and is separated by an intermediate bottom (5) from the region (4) of the inner space of the container forming the housing (1), which region is arranged above said container and forms the storage space for the accessories and/or the auxiliary means, **characterized in that** a cable drum (9), which is provided with a retracting mechanism, for an electric connecting cable is provided adjacent to the power section (2) in the compartment (3) which is assigned to the power section (2), which cable drum is associated with a cable output provided on a side wall of the housing (1), which cable output comprises a funnel (11) for catching a connector provided at the end of the connecting cable, and wherein the upper region (4) of the container forming the housing(1), which region forms a storage space for accessories or auxiliary means, is subdivided by intermediate walls (11) into several partitions (4a, b, c) which are accessible from above, and wherein the upper side of the container forming the housing (1) can be closed by a pivotable lid (14), which has a trough-shaped or groove-shaped cross-sectional configuration and is provided in the region of its exterior side with a carrying handle (15).

2. A portable electric welding and/or cutting device according to claim 1, **characterized in that** the compartment (3) assigned to the power section (2) comprises a front plate (6) with operating and/or connecting fittings (7, 8).

3. A portable electric welding and/or cutting device according to claim 2, **characterized in that** the connecting fittings (8) are formed as jacks at least for connecting a burner hose and/or workpiece cable.

4. A portable electric welding and/or cutting device according to one of the preceding claims, **characterized in that** the size and/or the configuration of the partitions (4a, b, c) provided in the upper region (4) of the container forming the housing (1) are adjusted to the size and/or configuration of the items to be accommodated, and retainers for the items to be accommodated therein are provided in the partitions (4a, b, c).

5. A portable electric welding and/or cutting device according to one of the preceding claims, **characterized in that** the lid (14) can be locked.

6. A portable electric welding and/or cutting device according to one of the preceding claims, **characterized in that** the carrying handle (15) is formed as a centrally arranged rod which continues over the length of the lid (14).

7. A portable electric welding and/or cutting device according to one of the preceding claims, **characterized in that** the container formed by the housing (1) is provided with feet (17) on the bottom.

8. A portable electric welding and/or cutting device according to one of the preceding claims, **characterized in that** the container formed by the housing (1) is formed as a trolley, which is provided with a preferably extendable strain-relief and/or thrust clamp (18) and rollers (19) associated therewith.

9. A portable electric welding and/or cutting device according to one of the preceding claims, **characterized in that** on one side, preferably on the side of the container formed by the housing (1) opposite of the front plate (6) provided with the connecting and/or operating fittings (7, 8), an add-on device is provided for the detachable attachment of an add-on carrier (21) assigned to an item that cannot be stored in the container formed by the housing (1).

10. A portable electric welding and/or cutting device according to claim 9, **characterized in that** the add-on device is formed as a hole pattern provided in the region of one side of the housing (1).

11. A portable electric welding and/or cutting device according to claim 9 or 10, **characterized in that** the add-on carrier (21) is provided with rollers (22), and the housing (1) is provided on the bottom side with connecting means for further rollers (23).

12. A portable electric welding and/or cutting device according to one of the claims 9 to 11, **characterized in that** the add-on carrier (21) is formed for receiving a gas cylinder (20), and a gas tube originating therefrom can be inserted into the compartment (3) associated with the power section (2).

## Revendications

1. Appareil de soudure et/ou de découpe électrique portable avec une partie de puissance électrique (2) qui est montée dans un boîtier (1) conformé comme un conteneur portatif sur lequel sont disposés des organes de commande (7) associés à la partie de puissance (2) et qui est muni de câbles et/ou de lignes associés à des entrées et/ou sorties pour la partie de puissance (2), dans lequel le conteneur portatif formant le boîtier (1) est agrandi au-delà de la partie de puissance (2) et présente un compartiment (3) associé à la partie de puissance (2), dans lequel la partie de puissance (2) est installée à demeure, et une zone (4) conçue comme un espace de rangement pour des accessoires ou des équipements auxiliaires, le compartiment (3) associé à la partie de puissance (2) étant disposé dans la partie de fond inférieure du conteneur formant le boîtier (1) et étant séparé par un double fond (5) de la partie (4) de l'intérieur du conteneur formant le boîtier (1) prévue au-dessus qui forme l'espace de rangement pour des accessoires et/ou des équipements auxiliaires, **caractérisé en ce qu'**il est prévu dans le compartiment (3) associé à la partie de puissance (2), outre la partie de puissance (2), un tambour de câble (9) muni d'un mécanisme enrouleur pour un câble de raccordement électrique, qui est associé à une sortie de câble prévue sur une paroi latérale du boîtier (1) comportant un entonnoir (11) pour recevoir la prise prévue à l'extrémité du câble de raccordement, la partie supérieure (4) du conteneur formant le boîtier (1) qui forme l'espace de rangement pour des accessoires et/ou des équipements auxiliaires étant divisée par des cloisons (11) en plusieurs casiers (4a, b, c) accessibles par le haut et la face supérieure du conteneur formant le boîtier (1) pouvant être fermée par un couvercle (14) pivotant qui présente une configuration en section en forme d'auge ou de gouttière et qui est muni d'une poignée de transport (15) au niveau de sa face extérieure.

2. Appareil de soudure et/ou de découpe électrique portable selon la revendication 1, **caractérisé en ce que** le compartiment (3) associé à la partie de puissance (2) présente un panneau de façade (6) avec des organes de commande et/ou de raccordement (7, 8).

3. Appareil de soudure et/ou de découpe électrique portable selon la revendication 2, **caractérisé en ce que** les organes de raccordement (8) sont conformés comme des prises femelles au moins pour le raccordement d'un flexible de chalumeau et/ou du câble de pièce retour.

4. Appareil de soudure et/ou de découpe électrique portable selon l'une des revendications précédentes, **caractérisé en ce que** la taille et/ou la configuration des casiers (4a, b, c) prévus dans la partie supérieure (4) du conteneur formant le boîtier (1) sont adaptées à la taille et/ou à la configuration des objets qui doivent y être reçus et des fixations sont prévues dans les casiers (4a, b, c) pour les objets qui doivent y être reçus.

5. Appareil de soudure et/ou de découpe électrique portable selon l'une des revendications précédentes, **caractérisé en ce que** le couvercle (14) peut être verrouillé.

6. Appareil de soudure et/ou de découpe électrique portable selon l'une des revendications précédentes, **caractérisé en ce que** la poignée de transport (15) est conformée comme une barre continue disposée au centre sur la longueur du couvercle (14).

7. Appareil de soudure et/ou de découpe électrique portable selon l'une des revendications précédentes, **caractérisé en ce que** le conteneur formant le boîtier (1) est muni dans le bas de pieds d'appui (17).

8. Appareil de soudure et/ou de découpe électrique portable selon l'une des revendications précédentes, **caractérisé en ce que** le conteneur formant le boîtier (1) est conformé comme un chariot qui est muni d'un timon de traction et/ou de poussée (18), de préférence télescopique, et de roulettes (19) associées à celui-ci.

9. Appareil de soudure et/ou de découpe électrique portable selon l'une des revendications précédentes, **caractérisé en ce qu'**un dispositif de montage est prévu sur un côté du conteneur formant le boîtier (1), de préférence sur le côté opposé au panneau de façade (6) muni d'organes de commande et de raccordement (7, 8), pour la mise en place amovible d'un support de montage (21) associé à un objet qui ne peut pas être rangé dans le conteneur formant le boîtier (1).

10. Appareil de soudure et/ou de découpe électrique portable selon la revendication 9, **caractérisé en ce que** le dispositif de montage est conformé comme un motif de trous prévu au niveau d'une face du boîtier (1).

11. Appareil de soudure et/ou de découpe électrique portable selon la revendication 9 ou 10, **caractérisé en ce que** le support de montage (21) est muni de roulettes (22) et **en ce que** le boîtier (1) est muni dans le fond de moyens de raccordement pour d'autres roulettes (23).

12. Appareil de soudure et/ou de découpe électrique portable selon les revendications 9 à 11, **caractérisé en ce que** le support de montage (21) est conçu pour recevoir une bouteille de gaz (20) et **en ce qu'**un flexible de gaz sortant de celle-ci peut être introduit dans le compartiment (3) associé à la partie de puissance (2).
